# EUROPEAN PATENT APPLICATION

(11) **EP 4 723 468 A1**
(43) Date of publication of application: **08.04.2026**
(21) Application number: 25201028.5
(22) Date of filing: 09.09.2025
(51) Int. Cl.: H02P 6/15

(54) **VEHICLE SYSTEMS AND RELATED MOTOR CONTROL METHODS**

(30) Priority: 04.10.2024 IN 202411075148; 05.02.2025 US 202519045935
(71) Applicant: Honeywell International Inc., Charlotte, NC 28202 (US)
(72) Inventor: MUBASLAT, Saed, Charlotte, 28202 (US); M, Nasrullah Habeeb, Charlotte, 28202 (US); CHEEMALA, Vaishnavi, Charlotte, 28202 (US); B, Haritha, Charlotte, 28202 (US); PATIL, Nikhila, Charlotte, 28202 (US)
(74) Representative: Ingrassia, Fisher & Lorenz UK Ltd.

(57) **Abstract**

Fly-by-wire vehicle systems and related actuation systems and operating methods are provided for actuating a flight control component. An exemplary method of operating a motor coupled to a flight control component involves determining a time period associated with an electrical cycle based on one or more electrical characteristics associated with a respective phase of the motor during the electrical cycle, calculating an excitation offset based at least in part on the time period associated with the electrical cycle, and thereafter operating a power conversion arrangement to apply a subsequent set of one or more voltage signals to the respective phase of the motor at a respective time within a subsequent electrical cycle corresponding to the excitation offset after a start of the subsequent electrical cycle to align excitation of the respective phase of the motor with an extremum of an electrical characteristic associated with the respective phase.

## Description

### CROSS-REFERENCE TO RELATED APPLICATION

This application claims priority to India Provisional Patent Application No. 202411075148, filed October 4, 2024, the entire content of which is incorporated by reference herein.

### TECHNICAL FIELD

The subject matter described herein relates generally to vehicle systems, and more particularly, embodiments of the subject matter relate to motor control systems and methods for vertical take-off and landing (VTOL) aircraft and other aircraft systems.

### BACKGROUND

In some modern aircraft, traditional mechanical flight control systems have been replaced with electrically controlled actuators, often referred to as fly-by-wire. Instead of mechanical linkages between cockpit controls and flight control surfaces, propulsion systems and/or lift systems, electrical signals are utilized to communicate movements of cockpit controls to the controllers associated with the appropriate flight control components or systems. Vertical take-off and landing (VTOL) aircraft or other aircraft non-conventional aircraft may include any number of different actuators or effectors arranged or distributed at various locations throughout the body of the aircraft and operated independently of one another to provide lift, propulsion, and/or attitude control for the aircraft (e.g., propellers, lift fans, rotors, flight control surface actuators, and/or the like), which increases the amount of wiring and interfaces required. For smaller aircraft, such as air taxis or other urban air mobility (UAM) vehicles, it is often desirable to minimize the amount of wiring, weight, and associated costs.

In aviation contexts or other safety critical applications, it is desirable to provide redundancy and fail operational systems. However, traditional motor control systems typically have various inefficiencies, limitations or other disadvantages as applied to aviation applications, such as VTOL aircraft. For example, traditional commutation techniques may apply excitations without consideration to the way the motor stator coils are wound, which may impact efficiency as the back electromotive force (emf) and motor current will have different profiles depending on the physical windings pattern. Mechanical inaccuracies in sensor alignment can further reduce efficiency and exacerbate electrical misalignment with respect to the back emf. Accordingly, it is desirable to provide motor control methods and systems for improved efficiency and corresponding reductions in weight and cost while compensating for variations in winding configuration, sensor alignment and the like. Other desirable features and characteristics will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Fly-by-wire vehicle systems and related operating methods are provided. An exemplary method of operating a motor involves operating a power conversion arrangement to apply an initial set of one or more voltage signals to a respective phase of the motor at a first time corresponding to a start of a first electrical cycle, determining a time period associated with the first electrical cycle based on one or more electrical characteristics associated with the respective phase of the motor during the first electrical cycle, calculating an excitation offset based at least in part on the time period associated with the first electrical cycle, and thereafter operating the power conversion arrangement to apply a subsequent set of one or more voltage signals to the respective phase of the motor at a third time within a subsequent electrical cycle corresponding to the excitation offset after a second time corresponding to a start of the subsequent electrical cycle, wherein a difference between the third time and the second time is influenced by the excitation offset.

An apparatus is also provided for a non-transitory computer-readable medium having computer-executable instructions stored thereon that, when executed by a processing system, cause the processing system to operate a power conversion arrangement coupled to a motor to apply an initial set of one or more voltage signals to a respective phase of the motor at a first time corresponding to a start of a first electrical cycle, determine a time period associated with the first electrical cycle based on one or more electrical characteristics associated with the respective phase of the motor during the first electrical cycle, calculate an excitation offset based at least in part on the time period associated with the first electrical cycle, and thereafter operate the power conversion arrangement to apply a subsequent set of one or more voltage signals to the respective phase of the motor at a third time within a subsequent electrical cycle corresponding to the excitation offset after a second time corresponding to a start of the subsequent electrical cycle, wherein a difference between the third time and the second time is influenced by the excitation offset.

A system is also provided that includes a power conversion arrangement including a plurality of phase legs, wherein each phase leg of the plurality of phase legs is coupled between a first reference voltage node and a second reference voltage node, a motor including a plurality of windings, wherein each winding of the plurality of windings is coupled between a respective output node of a respective phase leg of the plurality of phase legs and a third node, a sensing arrangement coupled to the motor to provide measurement data indicative of an electrical characteristic associated with a respective phase of the motor, and a control module coupled to the sensing arrangement and the power conversion arrangement to operate the power conversion arrangement to apply an initial set of one or more voltage signals to the respective phase of the motor at a first time corresponding to a start of a first electrical cycle, determine a time period associated with the first electrical cycle based on the measurement data indicative of the electrical characteristic associated with the respective phase of the motor during the first electrical cycle, calculate an excitation offset based at least in part on the time period associated with the first electrical cycle, and thereafter operate the power conversion arrangement to apply a subsequent set of one or more voltage signals to the respective phase of the motor at a third time within a subsequent electrical cycle corresponding to the excitation offset after a second time corresponding to a start of the subsequent electrical cycle, wherein a difference between the third time and the second time is influenced by the excitation offset.

Furthermore, other desirable features and characteristics of the subject matter described herein will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a block diagram illustrating a fly-by-wire system suitable for use with a vehicle such as an aircraft in accordance with one or more exemplary embodiments;
FIG. 2 is a block diagram of an actuation system suitable for use as a remote actuation system to control a flight control component responsive to an input command signal from a flight control module in the fly-by-wire system of FIG. 1 in an exemplary embodiment;
FIG. 3 is a schematic diagram of an electrical system including a three-phase electric motor and corresponding three-phase power conversion arrangement suitable for use as a remote actuation system to control a flight control component responsive to an input command signal from a flight control module in the fly-by-wire system of FIG. 1 in an exemplary embodiment;
FIG. 4 is a flow diagram of an exemplary embodiment of a motor control process suitable for implementation by the actuation system of FIG. 2 in the fly-by-wire system of FIG. 1 in accordance with one or more embodiments; and
FIG. 5-6 are timing diagrams depicting relationships between an electrical characteristic of a respective phase of an electric motor and command signals for operating switches of an inverter phase leg associated with that phase in accordance with an exemplary implementation of the motor control process of FIG. 4.

### DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to electrically controlled vehicle systems. For purposes of explanation, the subject matter is described herein primarily in the context of aircraft where flight control components are controlled using electrical signals, however, the subject matter is not necessarily limited to use with aircraft and may be implemented in an equivalent manner for other types of vehicles (e.g., automotive vehicles, marine vessels, or the like). That said, exemplary embodiments may be described herein in the context of urban air mobility (UAM) vehicles or other vertical takeoff and landing (VTOL) aircraft that includes various remote actuation systems that actuate or otherwise operate flight control components which provide lift, propulsion, and/or attitude control for the aircraft, such as, for example, a flight control surface actuator, lift fan, motor, or similar flight control component capable of adjusting or otherwise influencing a position or orientation of the aircraft.

As described in greater detail below, in exemplary embodiments, a motor control system is coupled to a power conversion arrangement and is configurable to operate the respective phase legs of the power conversion arrangement to commutate an electric motor in an adaptive manner for orthogonality between the stator and rotor fields to achieve improved efficiency. In this regard, when the electric motor is associated with a flight control component of a UAM vehicle, a VTOL aircraft, or other type of aircraft or rotorcraft, improved efficiency can result in an increase the ratio of distance traveled to energy consumed (e.g., increased miles or kilometers per kilowatt hour) or otherwise reduce power demand to facilitate corresponding reduction in battery size, weight and related costs. In exemplary implementations, a time period or duration associated with a current or preceding electrical cycle is determined based on one or more electrical characteristics associated with the respective phase(s) of the motor during the respective electrical cycle. The period of the electrical cycle is utilized to calculate an excitation offset for shifting actuation of the phase leg(s) associated with the respective phase(s) of the motor during a subsequent electrical cycle to substantially center or otherwise align actuation of a respective phase leg with an extremum of the back emf for the respective phase of the motor. In this manner, by utilizing the measured back emf, the excitation offset mitigates electrical phase angle inaccuracies with respect to the back emf that could otherwise result from mechanical inaccuracies with respect to the placement of motor position sensors while dynamically adjusting the stator field to maintain orthogonality for maximizing torque at a targeted motor speed.

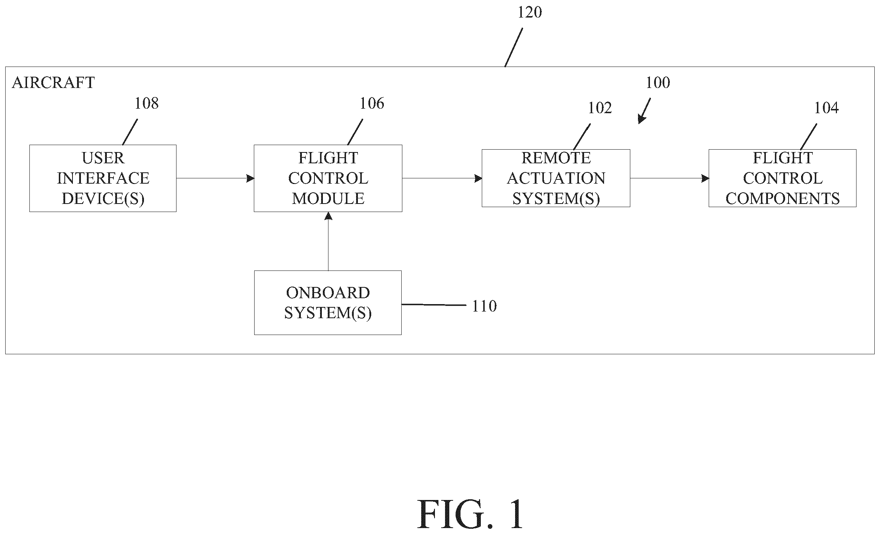

FIG. 1 depicts an exemplary embodiment of a fly-by-wire system 100 suitable for use with a vehicle such as an aircraft 120. In exemplary implementations, the aircraft 120 is realized as a UAM vehicle, a VTOL aircraft, or another aircraft that includes multiple different remote actuation systems 102 that are operable to control or otherwise manage respective flight control components 104 (e.g., propellers, lift fans, flight control surfaces and/or the like) distributed about the body of the aircraft 120, and thereby, control the position, orientation and/or attitude of the aircraft 120. In exemplary implementations, each remote actuation system 102 manages a unique flight control component 104 (or a set of flight control components) that is different from those flight control components 104 managed by other remote actuation system 102. That said, in practice, some implementations may employ redundancy, where more than one remote actuation system 102 is capable of operating a common flight control component 104.

The remote actuation systems 102 are communicatively coupled to a flight control module 106, which generally represents the processing system, processing device, hardware, circuitry, logic, software, firmware and/or other components of the fly-by-wire system 100 that are configured to receive signals indicative of a sensed or measured position, orientation, or adjustment to user interface devices 108 associated with the aircraft 120 and convert the inputs or adjustments received at the user interface devices 108 into corresponding command signals for one or more flight control components 104 and output or otherwise provide the command signals to the remote actuation systems 102. For purposes of explanation, the flight control module 106 may alternatively be referred to herein as a flight control computer (FCC). The flight control computer 106 may be implemented or realized using any suitable processing system and/or device, such as, for example, one or more processors, central processing units (CPUs), controllers, microprocessors, microcontrollers, processing cores and/or other hardware computing resources configured to support the operation described herein. In this regard, each flight control computer 106 may include or access a data storage element (or memory) capable of storing programming instructions for execution that, when read and executed by the flight control computer 106, cause the flight control computer 106 to support operations of the fly-by-wire system 100. In practice, some implementations may employ redundancy, where multiple different instances of the flight control computer 106 independently determine and provide redundant command signals to a remote actuation system 102 concurrently.

The user interface devices 108 may be realized as one or more cockpit user interface devices onboard the aircraft 120, such as, for example, a joystick, lever, switch, knob, line select key, touch panel (or touchscreen), keypad, touchpad, keyboard, mouse or another suitable device adapted to receive input from a user. For example, the user interface devices 108 may be realized as joysticks including one or more sets of sensors configured to sense the position of a respective joystick in a reference direction (e.g., a horizontal or x-reference direction, a vertical or y-reference direction and/or the like), with each sensor being coupled to the flight control computer 106 to provide indicia of the user input position of the respective joystick. That said, it should be noted that although the subject matter may be described herein primarily in the context of pilot inputs or other input received via user interface devices 108 utilized to operate flight control components 104 in fly-by-wire aircraft 120, the subject matter described herein is not intended to be limited to any particular type of input to the flight control computer 106, and may be utilized in the context of any other type of measurement or command data (e.g., flight plan data) that may be input to a flight control module 106 for purposes of determining commands for operating the flight control components 104. Accordingly, the subject matter may be implemented in an equivalent manner for autonomously or remotely controlled aircraft. One or more exemplary arrangements of cockpit user interface devices, sensors, and flight control computers are described and depicted in United States Patent No. 11,155,341, which is incorporated by reference herein.

In practice, onboard systems 110 are communicatively coupled to the flight control computer 106 to provide real-time data and/or information regarding the operation of the aircraft 120 to the flight control computer 106 for analysis in conjunction with the user input received via the user interface device(s) 108. For example, in the context of an aircraft 120, the onboard systems 110 may include one or more avionics systems that support navigation, flight planning, and other aircraft control functions, and in practice, will likely include one or more of the following avionics systems suitably configured to support operation of the aircraft: a flight management system (FMS), a navigation system, a communications system, an autopilot system, an autothrust system, a weather system, an air traffic management system, a radar system, a traffic avoidance system, hydraulics systems, pneumatics systems, environmental systems, electrical systems, engine systems, trim systems, lighting systems, crew alerting systems, electronic checklist systems, an electronic flight bag and/or another suitable avionics system. Based on the data or information received from the respective onboard systems 110 and the user input to a respective user interface device 108, the flight control computer 106 commands for controlling the position of or otherwise operating one or more of the flight control components 104 to adjust the position and/or attitude of the aircraft 120.

During operation of the aircraft, the flight control computer 106 continually analyzes the outputs of the user interface devices 108 and the onboard avionics systems 110 to determine corresponding commands for how the respective flight control components 104 should be operated in response to adjustments or changes to the user interface devices 108 substantially in real-time. In this regard, in exemplary implementations, the flight control computer 106 calculates or otherwise determines a rate or amount of actuation associated with a particular flight control component 104 to adjust the position and/or attitude of the aircraft 120 in a manner corresponding to the user input received via a user interface device 108 and provides a corresponding command signal to the remote actuation system 102 associated with that flight control component 104 to effectuate the received user input.

In exemplary embodiments, the flight control computer 106 calculates or otherwise determines a desired rate and direction of actuation for a motor or other actuator associated with a remote actuation system 102 to produce the desired actuation of the flight control component(s) 104 associated with that remote actuation system 102 to adjust the position and/or attitude of the aircraft 120 in the desired manner and provides a corresponding command signal to the remote actuation system 102 for implementation. In some exemplary implementations, the command signal has a signal characteristic indicative of a commanded rotation and a commanded rotational direction for a motor associated with the remote actuation system 102.

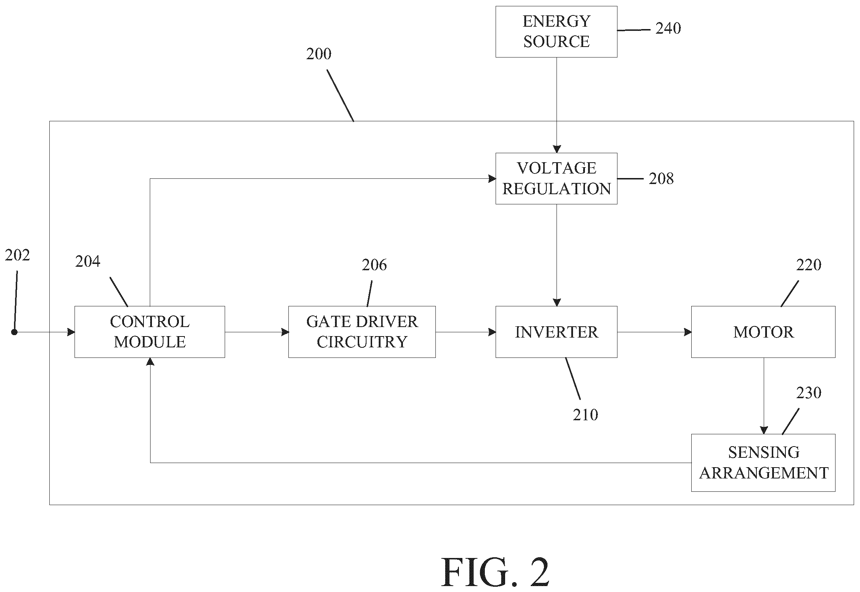

FIG. 2 depicts an exemplary embodiment of an actuation system 200 suitable for use as a remote actuation system 102 in the fly-by-wire system 100 of FIG. 1. In this regard, the actuation system 200 includes an actuator 220 that is capable of being mechanically coupled to or otherwise configured to actuate a flight control component 104 to influence the position and/or attitude of an aircraft 120, as described above. For purposes of explanation, the subject matter is described herein in the context of the actuator 220 being realized as a motor that is operable using a power conversion arrangement such as an inverter 210; however, it should be appreciated that the subject matter described herein is not necessarily limited to any particular type of actuator, power conversion arrangement or combination thereof.

The illustrated actuation system 200 includes an input interface 202, which generally represents the pins, connectors, terminals, ports or other input nodes associated with the actuation system 200 capable of being connected or otherwise coupled to an electrical cable or wiring for receiving an input command signal from a flight control computer or other supervisory control module external to the actuation system 200. The actuation system 200 includes control module 204, which generally represents hardware, software, firmware and/or other components that are coupled to the input interface 202 to receive the input command signal and automatically convert the input command signal into a corresponding rotational speed command and commanded rotational direction for the motor 220 to produce the desired actuation of a flight control component. In this regard, the control module 204 may include or otherwise be implemented or realized using any suitable processing system and/or device, such as, for example, one or more processors, central processing units (CPUs), controllers, microprocessors, microcontrollers, processing cores and/or other hardware computing resources configured to support the operation described herein. In various implementations, the control module 204 includes or accesses a data storage element (or memory) capable of storing programming instructions for execution that, when read and executed by the control module 204, cause the control module 204 to control operation of the motor 220 via the inverter 210 to support operations of the fly-by-wire system 100.

In the illustrated implementation, the control module 204 is coupled to a sensing arrangement 230, which generally represents one or more position sensors, speed sensors, current sensors, voltage sensors and/or other sensing elements associated with the motor 220 that provide measurement data indicative of the current state of the motor 220 substantially in real-time (e.g., the current rotor position, the current speed, the current motor current, the current output torque, and/or the like), where the measurement data is utilized by the control module 204 to convert commands received at the input interface 202 indicative of a commanded rotational speed and/or a commanded rotational direction into corresponding power conversion commands for operating the inverter 210 to apply voltage and excite phases of the motor 220 in the appropriate sequence and manner for achieving the commanded rotational speed in the commanded rotational direction given the current position or state of the motor 220. For example, based on a current rotor position indicated by rotor position measurement data received from a position sensing arrangement 230 and a commanded rotational direction, the control module 204 may determine the appropriate sequence or order for exciting the phases of the motor 220 to produce rotation in the commanded direction and generate corresponding power conversion commands for operating the corresponding phases (or phase legs) of the inverter 210 to provide input power to those phases of the motor 220 in that order. Additionally, based on the commanded rotational speed, the control module 204 may determine the corresponding magnitude or duty cycle for the power conversion commands to result in the appropriate amount of power input to the motor 220 to achieve the commanded rotational speed.

In the illustrated embodiment, the control module 204 is coupled to gate driver circuitry 206, which generally represents the transistors, switches and/or other circuitry that is configured to activate or deactivate respective phases of the inverter 210 in accordance with the power conversion command signals from the control module 204 to enable the desired direction of current flow through the respective phases of the motor 220 to produce rotation of the rotor of the motor 220 in the commanded rotational direction. The gate driver circuitry 206 also activates or deactivates the respective phases of the inverter 210 for a duration of time (or duty cycle) in accordance with the power conversion command signals to provide the amount of input power for achieving the commanded rotational speed. For example, in one or more implementations, the power conversion command signals output by the control module 204 are realized as pulse-width modulated (PWM) duty cycle command signals or are otherwise indicative of desired PWM duty cycles corresponding to the duration of time for which each respective phase leg of the inverter 210 should be activated to provide the amount of input power to the respective phases of the motor 220 that achieves the commanded rotational speed.

The inverter 210 generally represents the combination of transistors, diode and/or other power conversion circuitry that is operable to convert DC input power from an energy source 240 into alternating current (AC) output power that is applied to the respective phases of the motor 220 in accordance with the power conversion command signals determined by the control module 204. In this regard, the power conversion commands generated by the control module 204 cause the gate driver circuitry 206 to activate the phase legs of the inverter 210 to apply the input DC voltage and/or current for a duration of a control period that corresponds to the PWM duty cycle determined by the control module 204.

In one or more exemplary implementations, the motor 220 is realized as a brushless DC (BLDC) electric motor where the inverter 210 is operated to provide input current to the different phases of the motor stator windings in the commanded sequence corresponding to the power conversion commands generated by the control module 204 to cause the rotor of the motor 220 to rotate in the commanded direction, where the duty cycle or duration of activation of the respective inverter phase legs influences the amplitude of the current flow through the motor stator windings to control the rotational speed of the rotor. In exemplary implementations when the motor 220 is realized as a BLDC motor, the position sensing arrangement 230 is realized as a set of Hall effect sensors that provided measurement data indicative of the current state or position of the rotor of the motor 220 in relation to the stator windings, which, in turn, is utilized by the control module 204 to determine which set of motor stator windings should be excited to produce subsequent rotation of the rotor based on the angular position of the rotor with respect to the motor stator windings. That said, it should be appreciated that the subject matter described herein is not limited to BLDC motors or Hall effect sensors, and in practice, the subject matter may be implemented in an equivalent manner in the context of a different type of motor 220 and/or a different type of rotor position sensing arrangement 230 (e.g., encoders, resolvers, or the like).

As described in greater detail below, in exemplary implementations, the sensing arrangement 230 includes one or more voltage sensors capable of providing output measurement values indicative of the back emf across the respective phases of the electric motor 220. Based on the measured back emf observed via the sensing arrangement 230, the control module 204 dynamically determines an excitation offset for shifting or otherwise adjusting the respective timing of the PWM duty cycle commands for operating the phase legs of the inverter 210 relative to the start of the electrical cycle to substantially center or otherwise align excitation of a respective phase of the electric motor 220 with an extremum of the back emf across that respective phase of the electric motor 220. In this manner, the control module 204 attempts to maintain orthogonality between the stator and rotor magnetic fields for torque efficiency regardless of the motor speed or operating point of the electric motor 220. Improving efficiency may correspondingly improve miles per kWh for UAM, VTOL and other electric propulsion vehicles, or otherwise reduce power demand to corresponding facilitate reducing battery size, weight and other costs. Additionally, by utilizing the electrical cycle for excitation alignment, mechanical misalignment of sensors, encoders and the like can be mitigated and is not magnified or compounded when the number of motor poles increases.

Still referring to FIG. 2, in exemplary embodiments, the actuation system 200 includes a voltage regulation arrangement 208 coupled between a power supply input node associated with the energy source 240 and one or more supply reference voltage nodes associated with the inverter 210 to provide a regulated output voltage at a respective supply reference voltage node of the inverter 210. For example, in one or more implementations, the power supply input node associated with the energy source 240 may be realized as a higher voltage bus, which may be regulated or unregulated, where the voltage regulation arrangement 208 includes one or more individual voltage regulating power converters, where each of the individual voltage regulating power converters is coupled between the voltage bus and one or more of the respective supply reference voltage nodes coupled to respective phase legs of the inverter 210. In this regard, the voltage regulation arrangement 208 may be configurable to provide a substantially constant or otherwise controlled output voltage(s) to the supply reference voltage node(s) of the inverter 210. For example, as described in greater detail below, in some situations, one or more voltage regulating power converters of the voltage regulation arrangement 208 may be configured to provide a substantially constant DC output voltage at one or more of the supply (or positive) reference voltage nodes of the inverter 210, while in other situations, one or more voltage regulating power converters of the voltage regulation arrangement 208 may be configured to provide an alternating current (AC) output voltage at the supply (or positive) reference voltage node(s) of the inverter 210.

In exemplary implementations, the control module 204 generally includes at least one processing system, which may be implemented using any suitable processing system and/or device, such as, for example, one or more processors, central processing units (CPUs), controllers, microprocessors, microcontrollers, processing cores, application-specific integrated circuits (ASICs) and/or other hardware computing resources configured to support the operation of the control module 204 described herein. The processing system of the control module 204 also includes or otherwise accesses a data storage element (or memory), such as a random access memory (RAM), read only memory (ROM), flash memory, magnetic or optical mass storage, or any other suitable non-transitory short or long term data storage or other computer-readable media, and/or any suitable combination thereof that is capable of storing code or other computer-executable programming instructions that, when executed by the processing system, are configurable to cause the processing system to support or otherwise facilitate a variable commutation motor control service that is configurable to support the subject matter described herein.

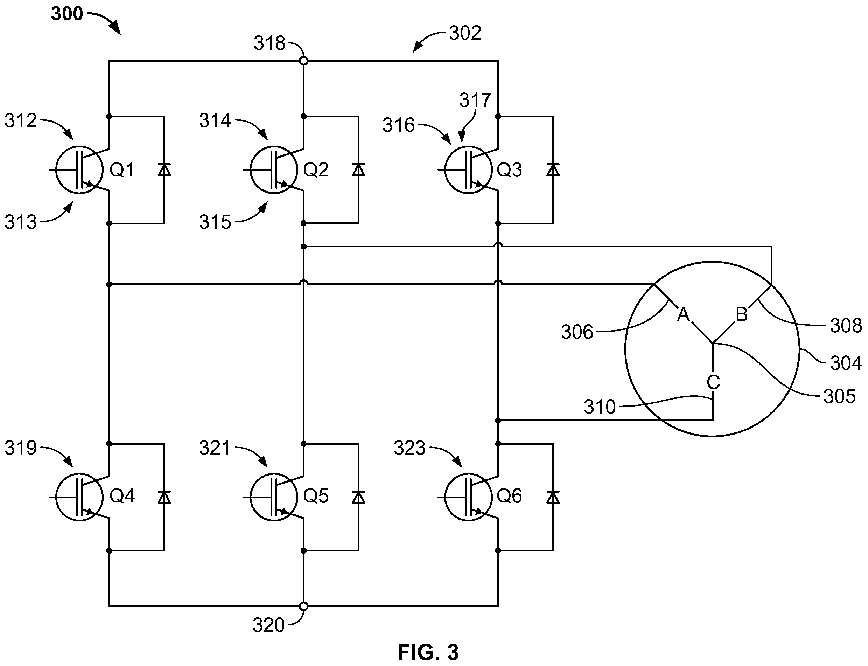

FIG. 3 depicts an exemplary electrical system 300 including an inverter 302 (e.g., inverter 210) and an electric motor 304 (e.g., electric motor 220) suitable for use in the actuation system 200 of FIG. 2. The electrical system 300 depicts a three-phase motor 304 including three sets of stator windings 306, 308, 310 corresponding to respective phases of the motor 304, where FIG. 3 depicts a wye configuration having respective ends of the stator windings 306, 308, 310 connected to one another at a common motor neutral node 305 in a connected neutral configuration. Each phase of windings 306, 308, 310 is connected to a corresponding phase leg 312, 314, 316 of the inverter 302, where each phase leg 312, 314, 316 includes a first transistor or switching element 313, 315, 317 (alternatively referred to herein as an upper switch) coupled between a positive reference voltage node 318 (e.g., the output reference voltage node of the voltage regulation arrangement 208) and a respective output node of the respective phase leg 312, 314, 316 connected to a line input excitation end (or terminal) of the respective phase of stator windings 306, 308, 310 of the electric motor 304. Each phase leg 312, 314, 316 also includes a second transistor or switching element 319, 321, 323 (alternatively referred to herein as a lower switch) coupled between the input excitation end of the respective phase of stator windings 306, 308, 310 at the a respective output node of the respective phase leg 312, 314, 316 and a negative (or ground) reference voltage node 320. In practice, the negative reference voltage node 320 may be connected to a second output reference voltage node of the voltage regulation arrangement 208, such that the voltage regulation arrangement 208 is capable of regulating or otherwise controlling the voltage difference across the respective inverter phase legs 312, 314, 316, and thereby, the respective voltage difference across the different phases of stator windings 306, 308, 310.

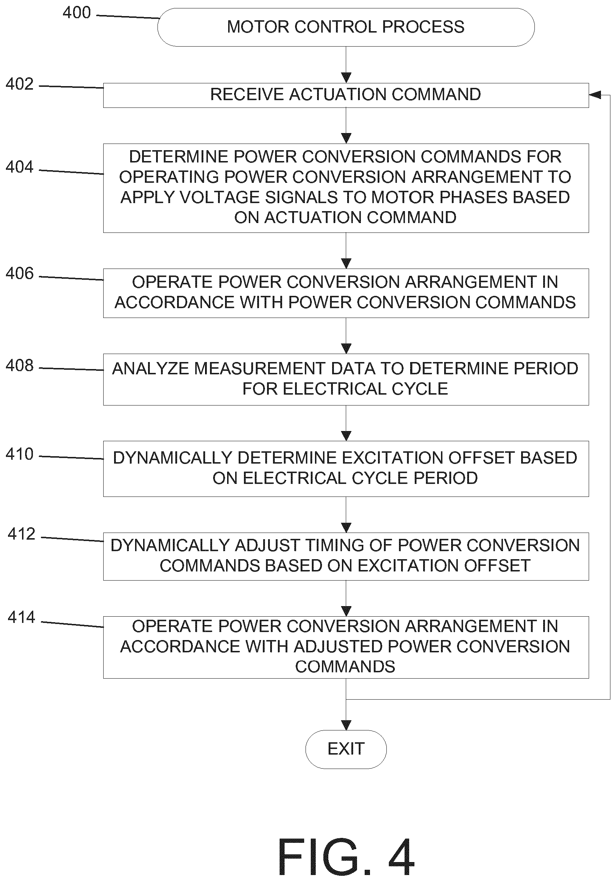

FIG. 4 depicts an exemplary motor control process 400 suitable for implementation by an actuation system to achieve a commanded actuation of a motor or other actuator by dynamically adjusting excitation of motor phases while operating the motor. The various tasks performed in connection with the illustrated process may be implemented using hardware, firmware, software executed by processing circuitry, or any combination thereof. For illustrative purposes, the following description may refer to elements mentioned above in connection with FIGS. 1-3. In practice, portions of the motor control process 400 may be performed by different elements of a vehicle system. That said, exemplary embodiments are described herein in the context of the motor control process 400 being primarily performed by the motor control module 204. It should be appreciated that the motor control process 400 may include any number of additional or alternative tasks, the tasks need not be performed in the illustrated order and/or the tasks may be performed concurrently, and/or the motor control process 400 may be incorporated into a more comprehensive procedure or process having additional functionality not described in detail herein. Moreover, one or more of the tasks shown and described in the context of FIG. 4 could be omitted from a practical embodiment of the motor control process 400 as long as the intended overall functionality remains intact.

The illustrated motor control process 400 initializes or otherwise begins by receiving or otherwise obtaining an actuation command that includes information indicative of a commanded actuation state (task 402). For example, as described above in the context of FIGS. 1-2, a control module 204 associated with an actuation system 102, 200, 300 may receive or otherwise obtain actuation commands from a flight control module 106 which indicate a commanded speed, position and/or other commanded actuation state attributes for a flight control component 104, which, in turn, may be utilized by the control module 204 to calculate or otherwise determine a corresponding commanded speed, position, torque and/or other actuation state attributes for the motor 220, 304 or other actuator responsible for actuating the flight control component 104.

After receiving an actuation command, the motor control process 400 calculates or otherwise determines power conversion commands for operating a power conversion arrangement to achieve the commanded actuation and then correspondingly operates the power conversion arrangement in accordance with the power conversion commands (tasks 404, 406). In exemplary implementations, the motor control module 204 receives or otherwise obtains feedback measurement data indicative of the current state of the motor 220 via one or more sensing arrangements 230 to identify the current or real-time values that characterize the attributes defining the current state of actuation of the motor 220, including, but not limited to, the current rotor position, the current motor speed (e.g., the rotational speed of the rotor), the current motor current, the current motor back emf, the current motor torque, and/or the like. Additionally, in various implementations, the control module 204 may also receive or otherwise obtain measurement data or other information indicative of the current state of the aircraft 120 from the flight control module 106 and/or one or more onboard systems 110, such as, for example, a current altitude of the aircraft 120, a current speed of the aircraft 120, a current vertical speed of the aircraft 120, a current flight phase of the aircraft 120, a current operating mode of the aircraft 120, a current configuration of the aircraft 120, and/or the like.

Based on the relationship between the current actuation state and the commanded actuation state, the control module 204 calculates or otherwise determines power conversion commands for operating the inverter phase legs 312, 314, 316 to apply voltage signals to the respective phases of the electric motor 220, 304 to commutate the electric motor 220, 304 in a manner that is likely to achieve the commanded actuation or otherwise reduce the difference(s) between the current actuation state and the commanded actuation state. In this regard, in exemplary implementations, the control module 204 provides duty cycles, modulation commands or other power conversion commands to the gate driver circuitry 206 which operates the phase legs 312, 314, 316 of the inverter 210, 302 or other power conversion arrangement in the appropriate sequence to produce the commanded rotation of the rotor in accordance with the input modulation commands to produce the commanded rotation of the rotor with the desired commutation of the motor 220, 304.

After initiating operation of the power conversion arrangement, the motor control process 400 continues by analyzing measurement data from the electric motor to dynamically determine the time period or duration associated with the current or most recent electrical cycle (task 408). Based on the period of the electrical cycle, the motor control process 400 dynamically determines an excitation offset for the power conversion commands, dynamically adjusts the power conversion commands based on the excitation offset to substantially align the excitation of the respective phases of the electric motor with the back emf associated with the respective phase of the electric motor, and then correspondingly operates the power conversion arrangement in accordance with the adjusted power conversion commands over subsequent electrical cycles (tasks 410, 412, 414). In this manner, after one or more initial electrical cycles, the motor control process 400 dynamically adjusts the timing of the excitation and/or commutation of the electric motor 220, 304 in a variable manner substantially aligned with the back emf of the electric motor 220, 304 to maintain orthogonality between the stator and rotor magnetic fields for improved efficiency.

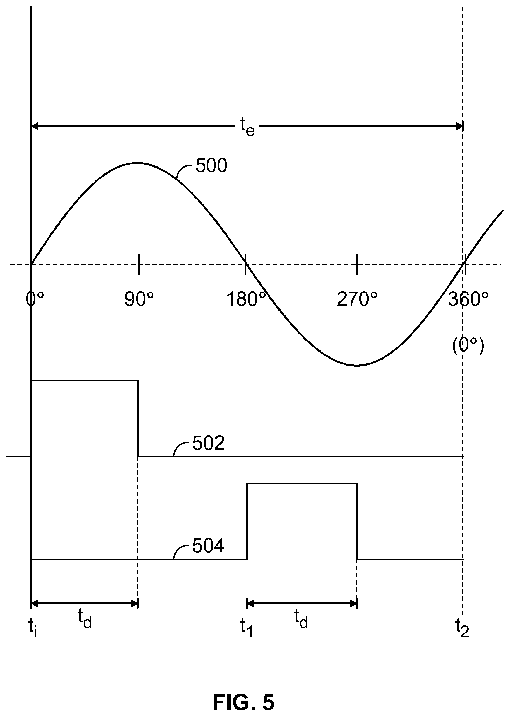

FIGS. 5-6 depict an exemplary sequence of timing diagrams depicting relationships between measurement data for an electrical characteristic associated with an individual phase of an electric motor that is indicative of an electrical cycle and corresponding duty cycle command signals for operating the respective switches of the inverter phase leg associated with the respective phase of the motor. It should be appreciated that FIGS. 5-6 are simplified representations for purposes of explanation and are not intended to be limiting. For purposes of explanation, FIGS. 5-6 are described in the context of the phase of stator windings 306 alternatively referred to herein as the A phase of the electric motor 220, 304.

Referring to FIG. 5, as described above in the context of FIG. 4, in response to an actuation command, based on a difference between a current actuation state of the electric motor 220, 304 and the commanded actuation state, the control module 204 calculates or otherwise determines power conversion commands for operating the inverter phase legs 312, 314, 316 to apply voltage signals to the respective phases of the electric motor 220, 304 to commutate the electric motor 220, 304 to achieve the commanded actuation in the desired direction. In this regard, FIG. 5 depicts an example where the control module 204 determines the A phase of the motor 220, 304 should be excited with a duty cycle corresponding to 60° of the electrical cycle with an extended overlap of 30° of the electrical cycle, resulting in a total excitation of 90° per commutation direction using a bidirectional commutation topology. It should be appreciated that the extended phase overlap prevents a situation where one of the windings 306, 308, 310 is deenergized or reversing commutation direction at the same time when another winding 306, 308, 310 is energized or reversing commutation direction. This results in a first PWM duty cycle command for activating the upper switch 313 of the A phase leg 312 from an initial time corresponding to 0° of the phase A electrical cycle to 90° of the phase A electrical cycle and a similar corresponding PWM duty cycle command for activating the lower switch 319 of the A phase leg 312 from a time corresponding to 180° of the phase A electrical cycle to 270° of the phase A electrical cycle. In a 3-phase embodiment, similar PWM duty cycle commands may be determined for the B and C phase legs 314, 316 to be excited or commutated for respective durations of 90° at 60° and 240° and 120° and 300°, respectively.

At an initial time *tᵢ* corresponding to the start of an electrical cycle, the control module 204 provides a PWM duty cycle command to the upper switch 313 (e.g., via gate driver circuitry 206) to turn on, close or otherwise activate the upper switch 313 to connect the input node of the A phase of stator windings 306 to the supply reference voltage node 318 to apply the voltage across the A phase of the stator windings 306 for a duration of time *t_{d}* corresponding to a control duty cycle of 90° (or 25%) of the electrical cycle dictating the switching period associated with the inverter 210, 302 before deactivating the upper switch 313 for the remainder of the switching period, resulting in the upper switch PWM duty cycle command signal 502. In a bidirectional commutation, at a subsequent time *t₁* corresponding to the midpoint of the switching period or 180° (or 50%) of the electrical cycle, the control module 204 provides a PWM duty cycle command to the lower switch 319 to turn on, close or otherwise activate the lower switch 319 to connect the input node of the A phase of stator windings 306 to the negative reference voltage node 320 to commutate current through the A phase in the opposite direction for a duration of time *t_{d}* corresponding to the control duty cycle (e.g., 60° of excitation plus 30° of extended phase overlap) of the switching period associated with the inverter 210, 302 before deactivating the lower switch 319 for the remainder of the switching period, resulting in the lower switch PWM duty cycle command signal 504.

As described above in the context of FIG. 4 (e.g., task 408), during the initial switching period for which the PWM duty cycle command signals 502, 504 are applied, the control module 204 monitors feedback measurement data from a sensing arrangement 230 coupled to the electric motor 220, 304 to monitor one or more electrical characteristics associated with the A phase stator windings 306 to calculate or otherwise determine the duration of an electrical cycle. For example, starting from the initial time *tᵢ*, the control module 204 may monitor the feedback measurement signal 500 from a current sensor indicative of the measured current flow through the A phase stator windings 306 to detect or otherwise identify the number of times the phase A current signal 500 crosses zero to identify the duration of the electrical cycle as the duration of time after occurrence of an initial zero crossing at *tᵢ* until a second zero crossing at a subsequent time *t₂* indicative a completed 360° electrical cycle, where the difference between zero crossings corresponds to the duration of the electrical cycle in the time domain (e.g., *tₑ = t₂ - tᵢ*)*.*

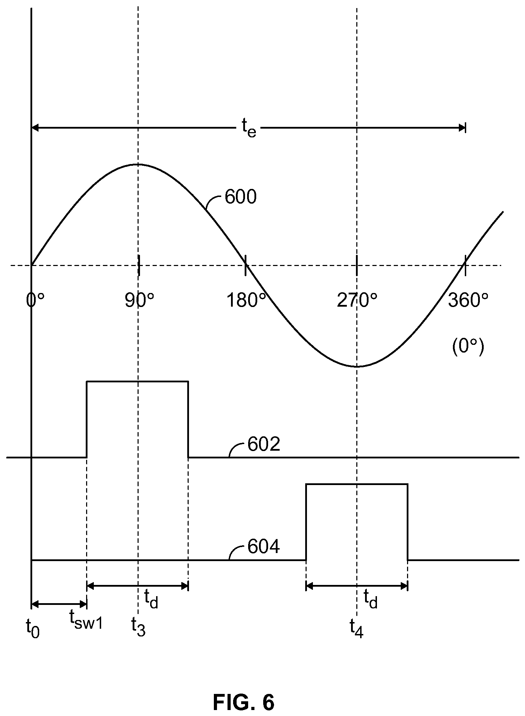

Referring now to FIG. 6, after determining the duration of the electrical cycle, the control module 204 calculates or otherwise determines an excitation offset for subsequent PWM duty cycle command signals based on the time period associated with the preceding electrical cycle to align the excitation of the respective motor phases with the extrema of the back emf through the respective motor phases (e.g., tasks 410, 412). In this regard, in practice, the back emf substantially tracks or otherwise correlates with the phase current, such that the maxima and minima of the back emf occurs at the electrical angles of 90° and 270° of the electrical cycle. Accordingly, the control module 204 calculates or otherwise determines an excitation offset for the respective PWM duty cycles corresponding to one fourth (or one quarter) of the preceding electrical cycle (e.g., *t_{offset} = tₑ*/4). Thereafter, for the next switching period starting at a subsequent time *t₀,* the control module 204 calculates or otherwise determines an adjusted timing for the upper switch PWM duty cycle command to substantially center or otherwise align the width of the PWM command signal at the excitation offset time after the start of the electrical cycle. In this regard, the control module 204 may calculate or otherwise determining a respective offset time (*t_{sw1}*) for activating the upper switch 313 after the start of the next electrical cycle as a function of the control duty cycle command pulse width (*t_{d}*) and the excitation offset (*t_{offset}*) in accordance with the equation *t_{sw1}=* (*t₀ + t_{offset}*) *-* (*t_{d}*/2)*,* resulting in the adjusted upper switch PWM duty cycle command signal 602 that is centered with respect to the excitation offset of 90° corresponding to the peak of the A phase back emf. In a similar manner, the control module 204 may determine an adjusted lower switch PWM duty cycle command signal 604 for activating the lower switch 319 with the respective offset time after the zero-crossing corresponding to the midpoint of the next electrical cycle.

As shown in FIG. 6, for a subsequent electrical cycle starting at a time *t₀,* the active or on period of the adjusted upper switch PWM duty cycle command signal 602 is substantially centered and aligned with the upper peak or maxima of the phase A current signal 600 (and thereby the peak of the phase A back emf) at a time *t₃* corresponding to one quarter or 90° into the subsequent electrical cycle corresponding to the excitation offset for the upper switch. In a similar manner, the active or on period of the adjusted lower switch PWM duty cycle command signal 604 is substantially centered and aligned with the lower peak or minima of the phase A current signal 600 (and thereby the minima of the phase A back emf) at a time *t₄* corresponding to three quarters or 270° into the subsequent electrical cycle.

It will be appreciated that as the speed or the load of the electric motor 220, 304 varies, the control module 204 may dynamically vary the PWM duty cycle commands based on the difference between current actuation state and the commanded actuation state while correspondingly varying the timing of the PWM duty cycle commands to maintain the PWM duty cycle substantially centered or otherwise aligned with the current or back emf of the respective phase of the electric motor 220, 304. In addition to varying the PWM duty cycle, the control module 204 may dynamically vary the phase angle between excitation of the different phases of the electric motor 220, 304 to provide phase angle modulation to improve efficiency across different operating points without being restricted to fixed duty cycles or fixed phase angles with respect to the switching cycle (e.g., fixed fields at 60° with no phase modulation or phase overlap). The motor control process 400 repeats throughout operation of the fly-by-wire system 100 to dynamically determine power conversion commands to reduce the difference between the commanded actuation state and the current actuation state such that the speed, torque, and/or other output of the electric motor 220, 304 and resulting actuation of flight control components 104 tracks or otherwise corresponds to user input actuation commands by dynamically varying the PWM duty cycles and phase angles for excitation of the respective phases of stator windings 306, 308, 310. At the same time, the control module 204 dynamically determines an excitation offset based on the preceding electrical cycle for maintaining the excitation substantially aligned with the back emf of the respective phase of stator windings 306, 308, 310 while varying the PWM duty cycles and phase angles.

It should be appreciated that the subject matter described herein is not necessarily limited to any particular commutation type or motor commutation topology. For example, a VTOL aircraft, UAM vehicle or other vehicle may include 6-phase electric motor configured to operate any one of the propulsion components, where the motor control process 400 is performed in the context of commutating the motor as a bipolar 6-phase BLDC motor. By aligning excitation with the extrema of the back emf of the respective phases of the motor, the motor control process 400 is capable of providing the desired torque and/or speed control in a manner that improves efficiency by maintaining orthogonality between the stator and rotor fields, thereby improving miles per kilowatt-hour (kWh) for UAM, VTOL and other electric propulsion vehicles. Improving efficiency may reduce power demand, and thereby reduce battery size, weight and other costs while providing added value in a highly redundant, reliable and failsafe system.

In an exemplary implementation, the motor control process 400 is performed in the context of commutating the 3-phase electric motor 304 using two-vector trapezoidal commutation with an extended phase overlap. At an initial point in the electrical cycle corresponding to 0° with respect to the A phase current (or back emf), the B phase current may be in a negative direction and the C phase current in a positive direction with the B phase lower switch 321 and the C phase upper switch 317 being activated or on, and the remaining switches 313, 315, 319, 323 being deactivated. At a point in time corresponding to 30° into the electrical cycle, the A phase upper switch 313 is activated to apply voltage to the A phase windings 306 for at least a duration of 120° (e.g., from 30° to 150°) such that the excitation of the A phase windings 306 is substantially centered on or otherwise aligned with the peak of the A phase current (or back emf) at 90° into the electrical cycle. When extended phase overlap is employed, the C phase upper switch 317 is deactivated after the A phase upper switch 313 is activated (e.g., at 5-15° electrically after activation of the A phase upper switch 313) prior to commutation of the C phase current at 60° into the electrical cycle.

At a subsequent point in time corresponding to 90° into the electrical cycle, the C phase lower switch 323 is activated to apply a voltage in the negative direction to the C phase windings 310 for at least a duration of 120° (e.g., from 90° to 210°) such that the excitation of the C phase windings 310 in the negative direction is substantially centered on or otherwise aligned with the minima of the C phase current (or back emf) at 150° into the electrical cycle. When extended phase overlap is employed, the B phase lower switch 321 is deactivated after the C phase lower switch 323 is activated (e.g., at 5-15° electrically after activation of the C phase lower switch 323) prior to commutation of the B phase current at 120° into the electrical cycle.

At a subsequent point in time corresponding to 150° into the electrical cycle, the B phase upper switch 315 is activated to apply a voltage in the positive direction to the B phase windings 308 for at least a duration of 120° (e.g., from 150° to 270°) such that the excitation of the B phase windings 308 in the positive direction is substantially centered on or otherwise aligned with the peak of the B phase current (or back emf) at 210° into the electrical cycle. When extended phase overlap is employed, the A phase upper switch 313 is deactivated after the B phase upper switch 315 is activated (e.g., at 5-15° electrically after activation of the B phase upper switch 315) prior to commutation of the A phase current at 180° into the electrical cycle. In this regard, during the first 180° of the electrical cycle, the A phase upper switch 313 is activated for a control duty cycle duration of time that is greater than or equal to 120° but substantially centered or otherwise aligned with the peak of the A phase current (or back emf).

At a subsequent point in time corresponding to 210° into the electrical cycle, the A phase lower switch 319 is activated to apply a voltage in the negative direction to the A phase windings 306 for at least a duration of 120° (e.g., from 210° to 330°) such that the excitation of the A phase windings 306 in the negative direction is substantially centered on or otherwise aligned with the minima of the A phase current (or back emf) at 270° into the electrical cycle. When extended phase overlap is employed, the C phase lower switch 323 is deactivated after the A phase lower switch 319 is activated (e.g., at 5-15° electrically after activation of the A phase lower switch 319) prior to commutation of the C phase current at 240° into the electrical cycle. Thus, the C phase lower switch 323 is activated for a control duty cycle duration of time that is greater than or equal to 120° but substantially centered or otherwise aligned with the minimum of the C phase current (or back emf).

At a subsequent point in time corresponding to 270° into the electrical cycle, the C phase upper switch 317 is activated to apply a voltage in the positive direction to the C phase windings 310 for at least a duration of 120° (e.g., from 270° of the current cycle until 30° into the next cycle) such that the excitation of the C phase windings 310 in the positive direction is substantially centered on or otherwise aligned with the peak of the C phase current (or back emf) at 330° into the electrical cycle. When extended phase overlap is employed, the B phase upper switch 315 is deactivated after the C phase upper switch 317 is activated (e.g., at 5-15° electrically after activation of the C phase upper switch 317) prior to commutation of the B phase current at 300° into the electrical cycle.

At a subsequent point in time corresponding to 330° into the electrical cycle, the B phase lower switch 321 is activated to apply a voltage in the negative direction to the B phase windings 308 for at least a duration of 120° (e.g., from 330° of the current cycle until 90° into the next cycle) such that the excitation of the B phase windings 308 in the negative direction is substantially centered on or otherwise aligned with the minima of the B phase current (or back emf) at 30° into the next electrical cycle. When extended phase overlap is employed, the A phase lower switch 319 is deactivated after the B phase lower switch 321 is activated (e.g., at 5-15° electrically after activation of the B phase lower switch 321) prior to commutation of the A phase current at 360° into the electrical cycle corresponding to the start of the next electrical cycle.

In the context of the 3-phase, 2-vector trapezoidal commutation, the control module 204 may dynamically determine the respective timings for activating and deactivating the switches 313, 315, 317, 319, 321, 323 based on measurement data obtained during the preceding electrical cycle to maintain the excitation of the respective phase windings 306, 308, 310 substantially aligned with the peaks or minima of the respective phase currents or back emfs associated with the respective phase windings 306, 308, 310 to improve efficiency by increasing orthogonality between the stator and rotor fields. In contrast to traditional excitation schemes with no offset (e.g., activation or excitation at the zero crossing of the back emf) where the stator and rotor fields are not orthogonal, the 3-phase, 2-vector trapezoidal commutation described above utilizes an offset corresponding to 30° (e.g., activation of the A phase upper switch 313 from 30° to 150° instead of from 0° to 120°) to align the input voltage closer to the peak of the phase A back emf making the stator and rotor fields more orthogonal and higher in amplitude, thereby improving efficiency. In this regard, as the speed of the motor 304 varies, the control module 204 may correspondingly adjust the control duty cycles and resulting electrical cycle proportionally to achieve the desired speed of the motor 304 while maintaining efficiency. Additionally, in some implementations, the control module 204 may dynamically determine the respective offsets and/or extended phase overlaps based on feedback measurement data from the sensing arrangement 230 to improve efficiency based on the measured motor current feedback at a given voltage, back emf, and output speed and torque.

For the sake of brevity, conventional techniques related to avionics systems, VTOL aircraft or other UAM vehicles, rotorcraft or other aircraft, fly-by-wire systems, motor controls, power converters, voltage regulators, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented in varying ways for each particular application, but such implementation decisions should not be interpreted as causing a departure from the scope of the present invention. In addition, those skilled in the art will appreciate that embodiments described herein are merely exemplary implementations.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of operating a motor, the method comprising:
operating a power conversion arrangement to apply an initial set of one or more voltage signals to a respective phase of the motor at a first time corresponding to a start of a first electrical cycle;
determining a time period associated with the first electrical cycle based on one or more electrical characteristics associated with the respective phase of the motor during the first electrical cycle;
calculating an excitation offset based at least in part on the time period associated with the first electrical cycle; and
thereafter operating the power conversion arrangement to apply a subsequent set of one or more voltage signals to the respective phase of the motor at a third time within a subsequent electrical cycle corresponding to the excitation offset after a second time corresponding to a start of the subsequent electrical cycle, wherein a difference between the third time and the second time is influenced by the excitation offset.

2. The method of claim 1, wherein determining the time period comprises monitoring measurement data indicative of a back electromotive force associated with the respective phase of the motor to calculate the time period based on one or more zero crossings associated with the back electromotive force.

3. The method of claim 2, wherein calculating the excitation offset comprises calculating the excitation offset as a fraction of the time period corresponding to the one or more zero crossings associated with the back electromotive force.

4. The method of claim 3, wherein the excitation offset is configured such that a peak current resulting from the subsequent set of one or more voltage signals applied to the respective phase of the motor is aligned with a peak of the back electromotive force.

5. The method of claim 1, further comprising determining the third time within the subsequent electrical cycle based at least in part on the excitation offset and a duty cycle associated with a power conversion command for the respective phase of the motor.

6. The method of claim 1, wherein:
calculating the excitation offset comprises calculating the excitation offset as one fourth of the time period associated with the first electrical cycle; and
determining the third time comprises adding the excitation offset to the second time and subtracting one half of a duty cycle to calculate the third time for initiating excitation of the respective phase of the motor within the subsequent electrical cycle.

7. The method of claim 6, wherein operating the power conversion arrangement to apply the subsequent set of one or more voltage signals comprises activating a switching element between a positive reference voltage node and the respective phase of the motor at the third time for a duration of time corresponding to the duty cycle.

8. The method of claim 7, further comprising:
calculating a second excitation offset as three fourths of the time period associated with the first electrical cycle; and
adding the excitation offset to the second time and subtracting one half of the duty cycle to calculate a fourth time for excitation of the respective phase of the motor within the subsequent electrical cycle, wherein operating the power conversion arrangement to apply the subsequent set of one or more voltage signals comprises activating a second switching element between a negative reference voltage node and the respective phase of the motor at the fourth time for the duration of time corresponding to the duty cycle.

9. The method of claim 1, wherein:
calculating the excitation offset comprises calculating the excitation offset as three fourths of the time period associated with the first electrical cycle; and
determining the third time comprises adding the excitation offset to the second time and subtracting one half of a duty cycle to calculate the third time for excitation of the respective phase of the motor within the subsequent electrical cycle.

10. A system comprising:
a power conversion arrangement comprising a plurality of phase legs, wherein each phase leg of the plurality of phase legs is coupled between a first reference voltage node and a second reference voltage node;
a motor comprising a plurality of windings, wherein each winding of the plurality of windings is coupled between a respective output node of a respective phase leg of the plurality of phase legs and a third node;
a sensing arrangement coupled to the motor to provide measurement data indicative of an electrical characteristic associated with a respective phase of the motor; and
a control module coupled to the sensing arrangement and the power conversion arrangement to:
operate the power conversion arrangement to apply an initial set of one or more voltage signals to the respective phase of the motor at a first time corresponding to a start of a first electrical cycle;
determine a time period associated with the first electrical cycle based on the measurement data indicative of the electrical characteristic associated with the respective phase of the motor during the first electrical cycle;
calculate an excitation offset based at least in part on the time period associated with the first electrical cycle; and
thereafter operate the power conversion arrangement to apply a subsequent set of one or more voltage signals to the respective phase of the motor at a third time within a subsequent electrical cycle corresponding to the excitation offset after a second time corresponding to a start of the subsequent electrical cycle, wherein a difference between the third time and the second time is influenced by the excitation offset.

11. The system of claim 10, wherein the excitation offset is configured to align excitation of the respective phase of the motor with a peak of a back electromotive force associated with the respective phase of the motor.
